# EUROPEAN PATENT SPECIFICATION

(11) **EP 4 401 672 B1**
(45) Date of publication and mention of the grant of the patent: **06.05.2026**
(21) Application number: 22765168.4
(22) Date of filing: 29.08.2022
(51) Int. Cl.: A61C 17/22, A46B 15/00, A61C 17/34

(54) **ORAL APPLIANCE FOR TREATING A MOUTH OF A SUBJECT**
MUNDBEHANDLUNGSGERÄT
APPAREIL DE TRAITEMENT BUCCAL

(30) Priority: 13.09.2021 EP 21196252
(43) Date of publication of application: 24.07.2024
(73) Proprietor: Koninklijke Philips N.V., 5656 AG Eindhoven (NL)
(72) Inventor: GERHARDT, Lutz Christian, 5656 AG Eindhoven (NL)
(74) Representative: Philips Intellectual Property & Standards
(86) International application number: PCT/EP2022/073872
(87) International publication number: WO 2023/036635

(56) References cited:
- WO-A1-2004/039208
- WO-A1-2004/039208
- WO-A2-2020/017963
- WO-A2-2020/017963

## Description

### FIELD OF THE INVENTION

The current disclosure relates to dental health, and in particular, to the field of oral appliances.

### BACKGROUND OF THE INVENTION

The development and improvement of oral appliances is of increasing interest to the general population, as good oral hygiene reduces the likelihood of adverse dental conditions (such as caries, gingivitis, and periodontal disease) and systemic conditions (e.g. pre-diabetes) from occurring.

Generally, oral appliances comprise a cleaning/treatment module that a user or operator inserts into the mouth. The module comprises mechanical cleaning/treatment elements, such as brushes, bristles, or water jet elements, which clean and/or treat parts of the mouth, such as the teeth or gums, as the oral appliance is moved about the mouth.

An ongoing concern with oral appliances is that they are usually tailored for a general population. This means that a particular oral appliance (even if operated in an identical manner) will have varying levels of efficacy depending upon the geometry of the mouth of a subject, which can vary significantly from subject to subject. For instance, different mouth geometries may have differences in tooth size, tooth height, tooth width, jaw curvature, jaw (mis)alignments and jaw archetype(s).

There is therefore a desire to facilitate the provision of an oral appliance that is able to compensate for the variations between different mouth geometry in order to optimize dental cleaning or treatment outcomes.

US 2020/121428 A1 discloses a dental care device with a customized shape and customized cleaning tips.

WO 2004/039208 A1 disclsoes a toothbrush with soft fingers mounted on the toothbrush head. During use of the toothbrush the fingers move laterally relative to the axis of the toothbrush thereby improving the tooth cleaning and gum massaging performance of the toothbrush.

WO 2020/017963 A2 discloses a recess wall lined with bristles for a mouthpiece for simultaneously brushing at a plurality of dental positions.

### SUMMARY OF THE INVENTION

The invention is defined by the claims.

According to examples in accordance with an aspect of the invention, there is provided a mount of an oral appliance. The mount may be designed for one or more cleaning/treatment elements of the oral appliance, but may be otherwise used as a protective shield or retaining device for parts of the mouth.

The mount is formed of a deformable material and comprises: one or more holes positioned such that, when the mount is stretched in a first direction, the geometric shape of the mount is shifted so as to increase an amount of material that extends in at least one second, different direction. Proposed embodiments make use of holes or pre-cut tessellation patterns in a deformable/flexible mount to control or define the change in the geometric shape of the mount when it is stretched. In particular, when a force is applied to a mount with appropriately positioned and configured holes, the mount will deform so as to extend material in a direction different to the direction of the stretch.

The holes are positioned such that increased stretching of the mount in the first direction results in increased extension of material of the mount in the second direction.

Embodiments thereby provide an approach that controls a movement of the mount and (if present) any cleaning/treatment elements positioned on the mount, e.g. allowing the mount or any elements to completely surround a tooth. The proposed approach thereby provides a highly adaptable mount that can conform to any arbitrary shape for a subject's mouth/jaw shape. As the shape of the mount is responsive to stretching in a first direction, relatively simple actuation of the mount can be provided. The ability of the mount to (controllably) bend is also advantageous for ease and comfort of positioning and using the mount in the mouth.

Embodiments operate on the principle of kirigami, in which appropriately positioned cuts or holes define the geometry of bending performed by a structure containing the cuts/holes. In other words, the configuration of a structure that has undergone deformation is dependent upon the position of holes in the non-deformed structures.

The first and second directions are angled with respect to one another, and are preferably perpendicular to one another. The change or shift in geometric shape is characterized by the dimensions and geometry of the mount and its holes (e.g. rectangular slits, triangular cuts), the spacing between the holes as well as the (cylindrical) curvature of the mount in an undeformed state (a single principal curvature). The cylindrical curvature with a finite, arbitrary magnitude triggers or controls the mount to warp into a cylindrical 3D metasurface geometry upon stretching. The eventual effect or result of this shape shift is improved conformation of the mount to the tooth/jaw arch, and clamping, i.e., application of (lateral) forces to the tooth arch.

The mount is formed from a flexible and elastic material, i.e. one that is designed to bend when a force is applied to the material and return to its original configuration when the force is removed. It will be appreciated that such a mount could also be stretched, i.e. is stretchable.

Preferably, each of the one or more holes is a hole that is completely surrounded, enclosed or bounded by (deformable) material of the mount. In other words, each hole may be a throughhole having closed sides. Put another way, a perimeter of each hole may be formed of (deformable) material of the mount.

The one or more holes may be positioned such that, when the mount is deformed in the first direction along a first symmetry plane, the curvature of the mount in a first plane changes, wherein the first plane is angled with respect to first direction. Preferably, the first direction is normal to the first plane.

In at least one example, the mount is configured to be deformable between at least: a first configuration, in which a radius of the curvature of the mount in the first plane is at a first value; and a second configuration, in which the radius of the curvature of the mount in the first plane is at a second value, smaller than the first value, wherein the deforming between the first and second configurations is responsive to a stretching of the mount in the first direction. In this way, the radius of the curvature of the mount may decrease as the mount is stretched or pulled in the first direction.

The stretching causes a change in length of the mount in the first direction. Stretching or elongation of the mount may thereby change the configuration of the mount.

The one or more holes of the mounts may comprise two or more slits, which are aligned in parallel with each other and separated by a predetermined length. This configuration ensures reliable deformation of the mount. The slits may be of a same length and/or of a same width, which makes the deformation characteristics (i.e., upon stretching) more predictable and reliable.

The length of the slits may, for instance, be defined by the size of tooth of the subject for which the oral appliance is designed. For instance, for a human, the length of each slit may be between 1 and 35 mm, and the spacing between different slits may be between 1-10 mm. This approach ensures that the ends of the mount will be drawn closer to one another at a position approximately at the gum line of the subject (if the mount is positioned against a lower side of the tooth). The width of the slits may be in the range of between 0.1 and 2 mm.

There is also proposed a mount array comprising two or more mounts previously described. The mounts of the mount array may be connected/coupled along at least one axis/direction (e.g. using flexible hinges or joints) so that a deformation (such as a stretching) applied to one mount causes a same deformation in each other mount of the mount array.

There is also proposed a cleaning or treatment module for an oral appliance comprising one or more mounts or mount arrays as previously described; and for each mount, a set of one or more cleaning or treatment elements mounted on said mount for cleaning or treating one or more parts of a mouth.

The cleaning or treatment module may, for instance, form an (attachable) head portion or attachment unit for the oral appliance. In particular, a mount may act as a head portion for a probe-type cleaning/treatment device for insertion in the mouth. This may take a similar structural form as a conventional powered toothbrush, with a handle portion to which is attached (fixedly or releasably) to the head portion. The treatment module can be, however, also part of a conventional powered toothbrush or a combined brushing and flossing device. The oral appliance may comprise one or more other components, such as a handle, a power supply (such as a battery or cell and the like), and a drive train/transmission technology to generate high frequency mechanical vibrations of the mount (array) or cleaning module.

In some examples, each cleaning or treatment element comprises a set of one or more bristles for brushing a tooth of the mouth. Other forms of cleaning/treatment elements will be apparent to the skilled person (e.g. a pick or oral irrigator).

There is also proposed an oral appliance for cleaning and/or treating a mouth of a subject. The oral appliance comprises: the cleaning or treatment module and an actuation mechanism configured to controllably stretch the mount in the first direction.

The oral appliance may comprise a controller configured to control the operation of the actuation mechanism, to thereby control the geometric shape shift of the mount; (eventually also the amount of forces and clamping applied to the teeth or gums).

The controller may be configured to be operable in a cleaning mode, during which the controller controls the geometric shape of the mount such that the extent of material in the first and/or second direction is greater than a minimum magnitude. Thus, during the cleaning mode, the one or more cleaning elements may be positioned more proximate to the mouth part(s) (e.g. the teeth) that is/are to undergo cleaning. This improves an ease and efficacy of cleaning the mouth.

In some examples, when operating in the cleaning mode, the controller varies the geometric shape of the mount so that the mount performs period or alternating micromovements or vibrations towards and away from the tooth/gums or micromotions of the cleaning elements. This may be in addition or superimposed to vibrations provided by a transmission technology/drive train used to actuate the cleaning module in the deformed state (i.e., when the mount is stretched and conforming to the teeth). In this way, the controller may effectively modulate the size of the radius, e.g. to achieve a desired or target force to be applied to the mouth part (to dynamically accommodate for varying tooth sizes within the jaw) or to increase an efficacy of cleaning, e.g. by repeatedly engaging and disengaging or clamping and declamping or unclamping the cleaning element to allow waste material to migrate away from the cleaning site.

The controller may be configured to be operable in a mouth-insertion mode, during which the controller controls the geometric shape of the mount (or parts of a mount array) such that the mount is substantially flat to facilitate ease of insertion. Alternatively, the controller operating in the mouth-insertion mode may control the mount to be bent to its greatest possible extent, to reduce a size of the mount during insertion.

The actuation mechanism comprises an electro-magnetic control system configured to control the stretching of the mount using an electro-magnetic force. Alternatively the actuation mechanism may comprise: a motorized (mechanical) system configured to controllably stretch the mount in the first direction; an inflatable bladder fixed to one or both ends of the mount, and a fluid control system configured to control the entry and exit of fluid into the inflatable bladder to thereby control a stretching of the mount; a magnetic control system configured to control the stretching of the mount using a magnetic force; an electric control system configured to control the stretching of the mount using one or more materials exhibiting an electroactive responsive material property; a thermal control system configured to control the stretching of the mount using one or more temperature difference and/or gradient effects; and/or an optical control system configured to control the stretching of the mount using one or more electromagnetic waves, wherein the mount is photo-sensitive.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figures 1 and 2 illustrate a mount according to an embodiment;
Figure 3 illustrates dimensions of a mount for an embodiment;
Figure 4 illustrates structural elements of a element;
Figure 5 illustrates a cleaning/treatment module for an oral appliance according to an embodiment;
Figure 6 illustrates a mount according to an embodiment;
Figure 7 illustrates an oral appliance according to an embodiment;
Figure 8 and 9 illustrate example operating procedures for a controller according to an embodiment; and
Figure 10 illustrates an oral appliance according to another embodiment.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mount for an oral appliance. The mount comprises one or more holes or pre-cut tessellation patterns that are configured to, when the mount is stretched in a first direction, cause a further deformation of the mount in at least one other direction, for example, to cause a bending of the mount to generate clamping forces and improved conformation of the mount to varying tooth/jaw geometries.

Embodiments of the invention are based upon the principle of kirigami, and the recognition that control over conformation of the mount to the teeth and the bending of a mount for cleaning/treatment elements would be beneficial for an oral appliance. In particular, it has been innovatively recognized that appropriately positioned holes facilitate control over the deformation behavior of the mount, which facilitates additional control over geometrical accommodation to varying jaw sizes and control over clamping forces of cleaning/treatment elements in the mouth.

Proposed concepts may be employed in any suitable oral appliance, for instance, in oral appliances with mounts for mounting one or more cleaning/treatment elements for cleaning/treating the teeth of a subject.

In the context of the present invention, a deformable material is one that undergoes a transformation in size and/or shape (i.e. deforms) when a suitable force is applied to it. It is a material that can undergo rigid and/or elastic body deformation (translation, rotation in different planes). The deformable material can be flexible and/or stretchable. In particular, a deformable material should deform under a human level of force applied to the material (e.g. <1000N). The deformable material may be an (ideal) elastic material, i.e. one that returns to its original shape when a deforming force is released.

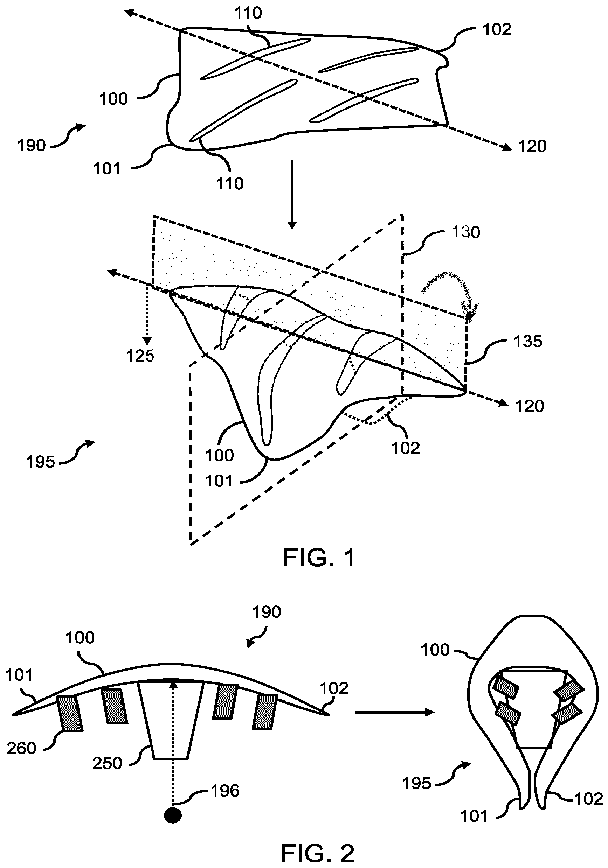

Figure 1 illustrates a mount 100 for an oral appliance according to an embodiment of the invention. Figure 2 illustrates a cross-sectional view of the mount 100 illustrated in Figure 1, the cross-section view being taken parallel to a first plane 130.

The mount may be configured for mounting one or more cleaning/treatment elements of the oral appliance.

The mount 100 is formed of a deformable material, e.g. an elastic or stretchable material. Suitable examples of deformable materials include elastomers (e.g. silicone rubber, butyl rubber, nitrile rubber and so on) and thermoplastics or polyesters (e.g. polyethylene terephthalate (PET) and the like).

The mount 100 may be substantially planar, e.g. can be manipulated to lie in substantially the same plane. When positioned to lie in a particular plane, the mount may have a relatively small thickness, e.g. <10 mm or <5 mm or < 1 mm in thickness. As a working example, the mount may have a thickness of 1.1 mm. In other examples, the mount 100 may be (slightly) curved.

The mount 100 comprises one or more holes 110 (e.g. cuts, slits or cavities). It is not essential that a hole passes the entire way through the mount. Rather, a hole may be a depression, divot or trench formed in the mount that changes a (relative) flexibility of the mount at the position of the hole.

The one or more holes are configured and positioned so that when the mount is stretched in a first direction 120 or first axis, the geometric shape of the mount changes. The change to the geometric shape is such that an amount of material (of the mount) that extends in at least one second direction 125 (different to the first) also changes, e.g. increases or decreases.

The deformation in the first direction 120 or axis is a stretching in the first direction 120 or axis, e.g. at least a positive stretching that increases/extends the length of the mount in the first direction, and which causes material to extend in the second direction 125.

In some preferable examples, the one or more holes 110 are configured and positioned so that, when the mount is streteched in the first direction 120, a geometric shape of the mount in the first plane 130 or a second plane 135 changes. In particular, a curvature of the mount in the first plane 130 may change responsive to a deformation of the mount in the first direction 120. The first plane 130 can be angled with respect to the first direction 120, e.g. does not contain the first direction. By way of example and as illustrated, the first direction 120 may be normal or perpendicular to the first plane 130. The second plane may represent a plane of symmetry, so that the shape of the mount in the first plane 130 maintains mirror symmetry with respect to the second plane 135 as the mount is deformed or stretched in the first direction 120.

Put another way, the one or more holes may be configured and positioned so that as a shape of the mount in a first dimension is changed (e.g. by stretching, squashing or other forms of deformation), the shape of the mount in a second dimension is also changed.

In some examples, the one or more holes may be configured and positioned so that as a shape of the mount in changed in a first direction (which lies along a first axis 120), the distance between two parts of the mount that do not lie along the first axis changes. For instance, a first part 101 of the mount may be brought closer to or further away from a second part 102 of the mount 100 as the mount is deformed (e.g. stretched) in the first direction.

In some preferred examples, when the mount is (positively) stretched in the first direction, the mount bends or curves so as to extend material in the second direction. In particular, when the mount is stretched in the first direction, the curvature of the (shape of the) mount in the first plane 130 increases (i.e. the radius of the curvature decreases).

Thus, as the mount is positively stretched in the first direction (which lies along the first axis), the first part 101 of the mount is brought closer to the second part 102 of the mount 100. Similarly, as the mount is negatively stretched (e.g. squashed) in the first direction, the first part 101 of the mount is moved further away from the second part 102 of the mount 100.

The mount may be configured to be deformable between at least a first configuration 190 and a second configuration 195. In the first configuration 190, a radius 196 (as seen in Figure 2) of the curvature of the mount in the first plane is at a first value (e.g. infinite). In the second configuration 195, a radius 196 of the curvature of the mount in the first plane is at a second, different value (e.g. non-infinite). Here, the second value is lower than the first value. The radius of the curvature, and therefore the switch between the first and second configurations, is responsive to deformation of the mount in the first direction.

A curvature (formed of known parameter k) may be controlled to fall within a predetermined range, e.g. a range of between 0 and 1, e.g. from 0.1 to 1. A curvature of 0 may indicate that the mount is not curved at all (i.e. is completely flat).

Preferably, the mount is sized and configured such that, when in the second configuration, the mount is able to fit around or clamp a tooth of a subject for the oral appliance (see Figure 2). In other words, the size of the mount may be defined by the size of the tooth of the subject for whom the oral appliance (comprising the mount) is designed.

In the illustrated example, a stretching of the mount in the first direction, i.e. an increasing of the mount's length in the first direction, causes the mount to switch from the first configuration to the second configuration. A releasing of the stretch (e.g. a return to the original length of the mount in the first direction) causes the mount to switch from the second configuration back to the first configuration.

The second value (for the radius of the curvature) is preferably less (e.g. <20 mm) than the first value (e.g. >20 mm).

The holes 110 may be elongate holes, e.g. elongate slits (as illustrated) and/or trenches. The elongate holes may be aligned in parallel with the first plane 130, as this has been identified as encouraging or facilitating bending of the mount (when stretched in the first direction 120) in the first plane. Where the holes are elongate, the bending of the mount, i.e. the change in the geometric shape of the mount under deformation in the first direction, is defined by the length and width of each single elongate holes (which may be identical in size) and the longitudinal and transverse spacing between adjacent elongate holes. The curvature can aid the design freedom of clamping effects of the mount because of the existence of the natural curvature, additional internal bending moments will be introduced into the mount geometry.

Reference is now specifically made to Figure 2, which illustrates a shape of the mount 100 in the first plane 130, switching from the first configuration 190 to the second configuration 195. This clearly demonstrates the decrease in radius of the shape of the mount in the first plane when moving from the first configuration 190 to the second configuration.

In this Figure, a tooth 250 of the subject is also illustrated, to demonstrate an exemplary interaction between an appropriately positioned mount 100 and a tooth 250. Figure 2 also illustrates a plurality of cleaning elements 260 (e.g. brushes) mounted on the mount 100 for improved contextual understanding. These cleaning elements may be omitted.

Figure 2 also clearly demonstrates how a first part 101 and a second part 102 of the mount 100 are brought closer together as the mount is extended in the first direction. For an appropriately positioned mount, this may lead to tooth clamping and application of forces onto the (lateral) surface of the tooth 250.

In the illustrated examples, each hole 110 comprises a slit or cut in the mount that passes the entire way through the mount. The external shape of the mount may also contribute to the manner in which bending or deformation takes place in the second direction 125 and/or first plane 130 when the mount is deformed in the first direction 120.

Use of the proposed mount in an oral appliance allows for the positive and/or negative force applied by any cleaning or treatment elements positioned or mounted on the mount, or the mount itself, to be controlled by controlling a deformation of the mount. In particular, a uniaxial stretching or deformation of the mount can control the shape of the mount in another dimension, e.g. to control the position of any elements mounted on the mount and/or a force applied by any elements mounted on the mounts.

In this way, when positioned in the mouth, the mount can be controlled to control a proximity between a cleaning/treatment element (on the mount) and a part of the mouth and/or a force applied by a cleaning/treatment element to the part of the mouth. This advantage provides an ability to bring cleaning/treatment elements into contact with any shaped part of the mouth, e.g. a same mount configuration can be used for different mouth variations (e.g. in tooth size, height, width, curvature, misalignment and jaw archetype variations).

Of course, where no cleaning/treatment elements are positioned on the mount, the mount itself may be adapted to engage with the user's teeth and/or gums, e.g. to act as a protective shield (e.g. for sports or the like).

The proposed approach makes use of the concept of kirigami, in which holes define the shape of an element when it is deformed/stretched. This approach allows a deformation/stretching of the mount in a first direction or axis to control the shape of the mount in a second direction or axis, i.e. in a plane normal to the first direction or axis.

The natural shape of the mount (e.g. when no deformation is applied to the mount) may be slightly curved or bent, e.g. be curved in the first plane 130. This increases a likelihood that the mount will bend in a desired direction in the first plane as additional internal bending moments will be introduced into the mount geometry when the mount it is stretched in the first direction 120.

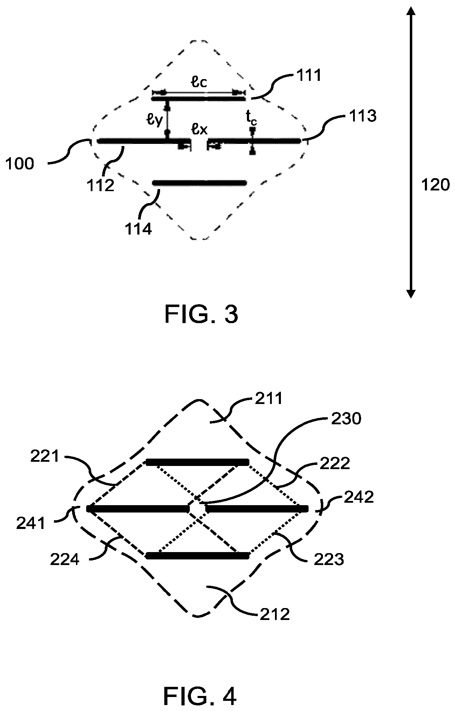

Figures 3 and 4 both provide a top down view of the mount 100, according to one embodiment.

As previously explained, the change in the geometric shape of the mount, when deformed/stretched in the first direction, is dependent upon or responsive to the position and configuration of the holes. In particular, the change is dependent upon the length/widths of the holes and/or the spacing between the holes.

The mount 100 comprises four holes, a first hole 111, a second hole 112, a third hole 113 and a fourth hole 114. Each hole is in the form of a slit or cut that passes the entire way through the mount 100. Each hole is here positioned in parallel to one another, with the second 112 and third 113 holes being positioned to lie along a same axis. The midpoint of the first 111 and fourth 114 holes are positioned to lie along a same axis. Each hole 111, 112, 113, 114 is positioned perpendicularly to the first direction 120.

The holes define how the overall structure of the mount 100 deforms responsive to a deformation/stretching in the first direction 120. As illustrated in Figure 4, the holes effectively decompose the mount 100 into four main structural components: (i) two handling tabs 211, 212 (ii) four parallelogram shells/elements 221, 222, 223, 224 delineated by the holes, (iii) a central elastic hinge 230, and (iv) two appendages 241, 242. The two appendages are equivalent to the first and second parts 101, 102 illustrated in Figures 1 and 2.

In some examples, each slit is of a same length ℓc and width t_{c}. A longitudinal spacing ℓy between the first and second/third holes, and the fourth and second/third holes, is equal. There is also a defined transverse spacing ℓx between the second and third holes. The transverse spacing is believed to modify the function of the elastic hinge, e.g. to control a distance between the first and second parts of the mount. The design parameters ℓy and ℓc may be defined relative to the width and height of different (human) teeth in order to fine-tune the mount to requirements for different populations and species (human teeth: ℓy <1-10 mm, animal teeth: ℓy <20 mm; ℓc =1-35 mm for both human and animal teeth).

In some examples, the ratio ℓc/ℓy falls within a first predetermined range, e.g. from 1.5 to 5; and/or the ratio ℓc/ℓx falls within a second predetermined range, e.g. from 2.5 to 5. These two ratios (both separately and together) have been identified as improving clamping forces and force transfer applied by a fully bent mount.

Changes to these characteristics or geometric parameters (length, width, longitudinal spacing and transverse spacing) control the shape and/or configuration of the mount when it is deformed/stretched in the first direction. Thus, it is apparent how the position and/or configuration of holes or slits in the mount 100 can define the change in the geometric shape of the mount 100.

The shape of the illustrated mount 100 is in the form of a diamond or trapezoidal shape, however, other shapes for the mount are possible, including oval shapes, squares, rectangles and so on.

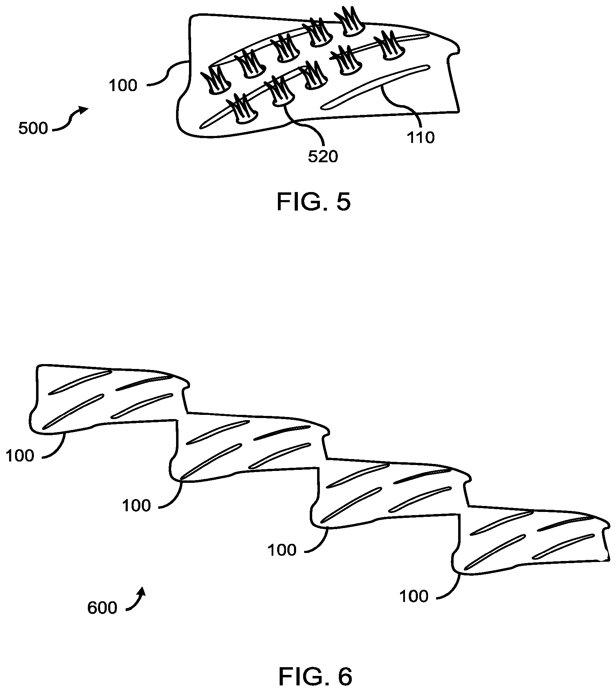

Figure 5 illustrates an example of a cleaning or treatment module 500 for an oral appliance. The cleaning or treatment module comprises a mount 100 and at least one set of one or more cleaning/treatment elements 520, mounted on/in the mount 100. Figure 5 illustrates an underside of the mount 100 (i.e. a side opposite to the upper surface illustrated in Figure 1).

The cleaning/treatment elements 520 may comprise, as illustrated, a bristle, tuft or brush for cleaning teeth/gums of a subject. However, any other form of cleaning/treatment element could be used instead and/or alongside a brush/tuft/bristle, such as an ultrasound cleaning element (e.g. CMUT), an LED for applying treatment light (e.g. UV light), electrode configurations to deliver electromagnetic or electric fields), reservoirs filled with whitening powder or paste, water jet outlet (e.g. fluid emitting nozzle), an image sensor, optical fiber configuration or camera and so on. Another example of a treatment element may be a tooth alignment element, e.g. configured to contact and apply a force to or restrict movement of a tooth in order to realign the tooth to a desired position over time.

The cleaning/treatment elements may be formed of a plurality of sets of one or more cleaning elements, e.g. two sets of brushes that are aligned in parallel. A first set of one or more cleaning/treatment elements may be configured for cleaning/treating a first side of the users mouth (e.g. outside of the gums) and a second set may be configured for cleaning/treating a second, different side of the subject's mouth (e.g. inside of the gums).

In use, the cleaning or treatment module 500 is positioned proximate to the subject's teeth/tooth, and deformed in the first direction. This causes the mount 100 to bend or curve towards the subject's teeth/tooth, to bring the cleaning/treatment elements 520 in closer proximity and/or to touch and conform to the subject teeth/tooth and/or apply greater pressure (cleaning force) to the teeth/tooth. In this way, the mount may effectively clamp the cleaning or treatment module, so as to bring the cleaning/treatment elements into contact and/or greater pressure with the part of the mouth.

Upon stretching some of the cleaning elements deflect and change the orientation may provide superior gum line cleaning as they bend inwards and make contact to the gum line at a preferred angle to enhance for example gum line cleaning.

The proposed approach is particularly advantageous for manufacturing processes of a mount with cleaning elements (as part of a cleaning/treatment module), as mounting of cleaning/treatment elements (e.g. tufting) on a less curved mount (e.g. when the mount is not deformed) is more simple than on a curved mount (e.g. if a non-bending curved mount were provided).

Figure 6 illustrates a mount array 600, forms of a plurality of mounts 100 connected to one another (e.g. using flexible hinges provided by an injection molding process). Each mount 100 may therefore represent a unit cell or mount section of the mount array. Use of a mount array increases an ease of interacting with an entire mouth of a subject, e.g. as multiple teeth could be addressed at a same time using a respective mount of the mount array 600. For instance, each mount could be designed for a different tooth. The shape of the mount array may be configured to conform to a bend or curve in a subject's mouth.

While in the mount array of Figure 6, the dimensions (geometry, material property, thickness of material) of the of the mount are constant, each mount can have different material properties, mount dimensions, and design parameters; this allows for further fine-tuning of the mount array to varying tooth and jaw variations, as well as allowing for the control of the clamping at various tooth sites. Although Figure 6 illustrates the mount array as comprising linearly connected mounts, a mount array could comprise mounts arranged along a curved line. Moreover, the mount array can also and/or otherwise comprise stacked mounts.

Deforming/stretching the entire mount array in a first direction will cause each mount 100 to change its geometric shape and extend material in a second different direction. The first direction may be the same direction as the direction in which the mounts are connected to form the mount array, increasing a simplicity in a device configured to deform the mount array.

In some examples, the mount array 600 forms part of a cleaning or treatment module (not shown). In particular, the cleaning/treatment module may comprise a mount array, in which each (separate) mount 100 may mount or hold one or more cleaning/treatment elements, e.g. as illustrated in Figure 5.

This approach would facilitate use of a separate mount for different parts of a mouth of a subject, e.g. a mount for each tooth. The size of each mount may be adapted according to the size of the part of the mouth associated with said mount.

One significant advantage of the proposed approach is increased ease and reduced complexity in manufacturing. For instance, if the mount is made of polyester, mounts (and holes therein) can be prepared by laser-cutting large polyester sheets before mounting any cleaning and/or treatment elements and adding tufts, bristles on a 2D surface, then pre-shaping into a slightly curved geometry. If an injection molding process is used, cleaning elements can be also easier integrated into a virtually flat surface e.g. by 2D overmolding or insert molding strategies.

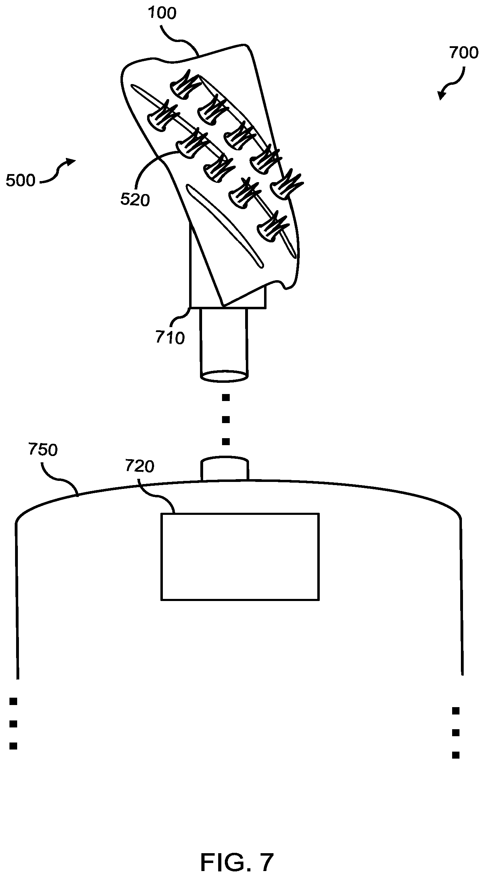

Figure 7 illustrates part of an oral appliance 700 according to an embodiment. The oral appliance 700 comprises a cleaning or treatment or cleaning module 500 (in this case a brush head allowing to clean multiple tooth surface simultaneously (i.e., occlusal, lingual, labial), as upon deformation the mount wraps around afore-mentioned tooth surfaces and forms a U-shaped envelope along a tooth line), comprising a mount 100 and one or more sets of one or more cleaning/treatment elements (here: tufts or bristles). The mount 100 may be replaced by a mount array, such as those previously described.

The oral appliance 700 further comprises an actuation mechanism 710 configured to controllably deform/stretch the mount in the first direction. In particular, the actuation mechanism may be configured to controllably stretch the mount 100 in the first direction.

In use, the oral appliance is controlled by a user to enter the mouth of the subject (which may be the user themselves or another subject). The user then moves the cleaning or treatment module so that it is brought into proximity with (or brought to touch) a part of the mouth to be cleaned or treated (e.g. a tooth or teeth). The actuation mechanism is then controlled to deform the mount, i.e., to stretch the mount in the first direction. This causes the mount to change geometric shape and extend material in the second direction, e.g. to undergo a bending or curving. This causes the cleaning/treatment elements to be brought into closer proximity and/or touch and/or apply greater cleaning pressure to the parts of the mouth or teeth. In this way, controlling the stretch of the mount 100 using the actuation mechanism 710 effectively controls the clamping or distance of the cleaning/treatment element(s) with respect to a part of the mouth to be treated/cleaned. If the mount is part of a toothbrush head, this can enable brushing multiple tooth surfaces (e.g. occlusal, lingual, labial) at the same time, as - upon stretching - the mount is wrapped around a tooth or parts of the jaw.

The actuation mechanism 710 may comprise a motorized system configured to controllably deform/stretch the mount in the first direction. Examples of suitable motorized systems includes a motor shaft driving a spindle (e.g. lying along the first direction) or a motor shaft driving a pulley and winding up an (elastic) rope/chain.

As another example, the actuation mechanism may comprise an inflatable bladder fixed to one or both ends of the mount, and a fluid control system configured to control the entry and exit of fluid (e.g. gas, air or combination of liquid and gas, or even bladder filled with gas and granular particles to exploit a granular jamming effect) into the inflatable bladder to thereby control a deforming, clamping and effective load transfer of the mount to the oral tissue. The inflatable bladder can be designed, e.g. through appropriate anisotropic extension that could be controlled by varying wall thickness, in such a way that stretching of the mount in the first direction can be performed. In some instances, the bladder may be controlled so that a vertical up-down motion of the mount can be controlled, e.g. for improved cleaning/treatment efficacy.

As another example, the actuation mechanism comprises an electro-magnetic control system configured to control the deformation of the mount using an electro-magnetic force. For instance, one end of the mount may comprise a first magnetic element (e.g. permanent magnetic, ferromagnetic or para-, or diamagnetic end plate) and the second (other) end may comprise an electromagnet, having a controllable magnetic field which can define a magnetic force between the two ends of the mount. The positions of the first and second ends define the first direction. Alternatively, the actuation mechanism may comprise a magnetic control system configured to control the deformation of the mount using a magnetic force. For instance, two passive permanent magnets, one stationary and fixed on an end plate, another one attached to a rotating or linear drive.

Other examples of actuation mechanisms include: an electric control system configured to control the deformation of the mount using one or more materials exhibiting an electroactive responsive material property (e.g. electroactive polymer); a thermal control system (e.g. Peltier or Seebeck element) configured to control the deformation of the mount using one or more temperature difference and/or gradient effects; and/or an optical control system configured to control the deformation of the mount using one or more electromagnetic waves, wherein the mount is photo-sensitive.

The oral appliance may further comprise a controller 720 configured to control the operation of the actuation mechanism, to thereby control the geometric shape shift of the mount. **In** the illustrated example, the controller is formed in a (optional) handle 750 of the oral appliance device. The controller 720 may control the operation of the actuation system by passing electrical signals to the actuation mechanism to define its operation.

Various modes of operation or electronic driving schemes are envisaged for the controller to control the shape of the mount in order to thereby (e.g. when inserted and appropriately positioned within the mouth of a subject, i.e., control the insertion process and mount geometry to optimize a consumer-friendly insertion procedure) control the conformation of the mount to a mouth of the subject and/or control any lateral force acting on part of the mouth (e.g. the tooth or jaw) by the cleaning/treatment elements.

The controller 720 may be configured to be operable in a cleaning mode. **In** a cleaning mode, the controller controls the geometric shape of the mount such that the extent of material in the first and/or second direction is greater than a minimum magnitude. For instance, when in the cleaning mode, the controller 720 may control the mount to be in the second configuration. The cleaning mode may, for instance, be controlled so that the mount is able to entirely surround or grasp a part of the mouth (e.g. a tooth).

In some examples, when operating in the cleaning mode, the controller varies the geometric shape of the mount so that the mount performs micromotions towards and away from the tooth surface. This can be performed, for instance, by periodically alternating the shape of the mount. By way of example, when operating in the cleaning mode, the controller may control the radius of the curvature of the mount to alternate between a first magnitude and a second magnitude.

Micromotions of the mount may increase the cleaning efficacy of a cleaning/treatment or help removing brushed debris, or more evenly illuminating the mouth or controlling an average light incident per area if the cleaning elements comprise UV or blue light LEDs, or allow to modulate energy density fields of any other energy (e.g. RF, ultrasound, electrical, electrochemical exposed to oral tissues).

In some examples, the oral appliance may comprise a force measurement device 730, sometimes known as a force gauge. The force measurement device may be configured to obtain a force measurement defining an amount of force applied by the mount to a mouth part. Suitable examples of a force measurement device may comprise piezoelectric sensors, Hall effect sensors, potentiometers and so on. Other examples will be well known to the skilled person. The force measurement device may, for instance, be mounted in/on the mount 100 or part of the handle 750

In some examples, when operating in the cleaning mode, the controller controls the geometric shape of the mount responsive to the force measurement.

As previously explained, controlling the geometric shape of the mount may control an amount of force applied by the mount to the mouth part. The controller may be configured, when operating in the cleaning mode, to control the amount of force applied by the mount to have an average applied force that falls within a predetermined range or is equal to a predetermined value. For instance, the controller may be configured to modulate the geometric shape responsive to the force measurement, e.g. to keep the average of the force measurement constant.

As another example, the force measurement may be used to control when to enter and/or exit the cleaning mode. For instance, the controller may be configured to enter the cleaning mode in response to the force measurement indicating a force is being applied to part of the mouth, e.g. indicating that the mount has been positioned in the mouth. Similarly, the controller may be configured to exit the cleaning mode in response to the force measurement indicating that no force is being applied to part of the mouth, e.g. indicating that the mount is to be removed from the mouth.

The controller may be configured to be operable in a mouth-insertion mode. In the mouth-insertion mode, the controller may control the curvature of the mount (in the first plane) such that the mount is substantially flat or fully bent to the maximum curvature. This increases an ease of inserting and removing the mount from the mouth.

Although labelled as a mouth-insertion mode, it will be clear that this mode is also useful for removal of the mount from the mouth.

The deformation applied to the mount when the controller operates in the mouth-insertion mode depends upon the natural state of the mount. For instance, when the mount is naturally curved (when no deformation is applied to it), then the controller may cause the actuating mechanism to negatively deform (e.g. negatively stretch) the mount to flatten the mount (or, alternatively, bend to the maximum possible level). When the mount is naturally flat, the controller may control the actuating mechanism to provide no deformation to the mount, or to the highest amount of deformation possible, to minimize the total mount volume to be inserted into the mouth.

The mode in which the controller operates may be responsive to a user input, e.g. at a user interface (not shown). In another example, the mode in which the controller operates may be responsive to the force measurement, as previously described.

In yet another example, the mode in which the controller operates may be responsive to user motion characteristics and/or position of the mount within the mouth, e.g. position along the arch of the teeth. These characteristics may be determined, for instance, using an inertial measurement unit (IMU), e.g. an accelerator or gyroscope, and/or a user motion or scrubbing detector.

For instance, mesial-distal motion may be detected, and used to define when to operate in the cleaning mode. As an example, when the mesial-distal motion exceeds some predetermined threshold, the controller may enter the cleaning mode (as this may indicate that the mount has reached a predetermined position within the mouth).

As an example, using signals from an IMU it is possible to determine the user motion. If the user motion is above a first threshold, this can indicate that the user is scrubbing too quickly (e.g. unintentionally causing damage to soft tissues or missing important spots to clean due to insufficient contact time), and the controller may exit the cleaning mode (temporarily) to reduce damage. If the user motion is below a second threshold, this can indicate that the user is scrubbing at a same location for too long, and the controller may act accordingly.

Approach for determining user motion from an IMU are well known, e.g. as established in US Patent No. 10,952,528, and could be implemented in the present invention for defining the operation of the controller.

An alternative and/or additional unit to a controller 720 may be a user interface, with which a user may interact to (e.g. manually) control the operation of the actuation mechanism.

Of course, the oral appliance may comprise additional elements or modules that are not illustrated, e.g. a power source, a power switch, a charging dock and so on. Suitable examples of elements for an oral appliance are well known to the skilled person.

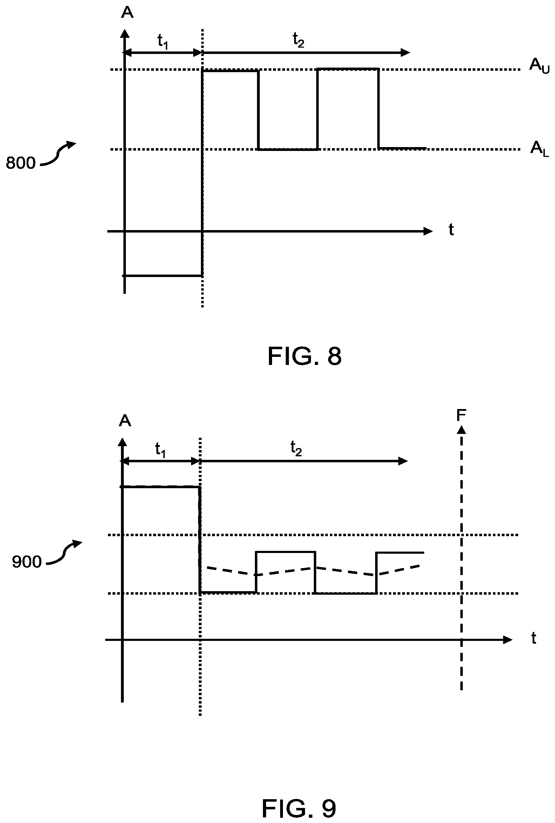

Figure 8 is a waveform 800 illustrating one example control strategy that might be performed by a controller of an oral appliance according to an embodiment.

In the illustrated waveform, time t is depicted on the x-axis and signal amplitude A is depicted on the y-axis, where signal amplitude is the amplitude of a control signal output by the controller for controlling the operation of the actuating mechanism. An increasing amplitude A increases the stretch applied to the mount in the first direction (and therefore increases a curvature of the mount and eventually the conformation and load transfer of the mount to the target tissue).

During a first time period t₁, the controller operates in a mouth insertion mode. In this example, the controller controls the actuating mechanism to negatively stretch the mount (i.e. push opposing ends apart), in order to flatten the mount during the mouth insertion.

During a second time period t₂, the controller operates in a cleaning mode. The actuating mechanism is modulated so that a stretch of the mount (and therefore curvature of the mount, i.e., clamping) is maintained at a substantially constant (average) value. This modulation alternates the signal amplitude between an upper value A_{U} and a lower value A_{L}, corresponding to two different level of mount-to-tooth clamping. Of course, this (bi-level) modulation is not essential, and the controller may instead attempt to maintain the signal amplitude at a single (constant) value. Moreover, other modulation signal schemes could be envisioned, e.g. slowly up-and down ramping (i.e. triangular modulation) or sinusoidal-like modulation.

The switch from the mouth insertion mode to the cleaning mode may be responsive, for instance, to a user input and/or a mode control signal. The mode control signal may be a signal responsive to a position and/or motion of the oral appliance, e.g. a mesial-distal motion/speed (i.e., brushing along a tooth side back-forth). For example, if the typical brushing user motion is recognized, the control switches between A_{U} and A_{L.}

Thus, the controller may send (duty-cycle driven) control signals to the actuating mechanism to generate variable stretch level profiles, as illustrated in Figure 8. This induces controlled clamping/folding of the mount. When the controller operates in the cleaning mode, the actuation signal amplitude, i.e. eventual clamping, could be varied between an upper and lower value.

While a positive stretch may be used to induce and control the level of clamping, a slight negative stretch could be also used (e.g. when the controller operates in a mouth-insertion mode) to flatten the mount to improve the initial insertion process and tooth contact of the oral appliance. The modulation can be also used to ease the removal of the device out of the mouth. This is demonstrated in the first time period t₁.

Figure 9 is a waveform 9900 illustrating another example control strategy that might be performed by a controller of an oral appliance according to an embodiment.

The waveform 9900 differs from the approach of Figure 8, in that the cleaning mode is made responsive to a (brushing) force measurement F (illustrated with dashed lines). In particular, the cleaning mode is configured to maintain a (average) force level F within a predetermined (cleaning) force range or at a predetermined (cleaning) force value. This is achieved through appropriate modulation of the control signal to the actuating mechanism.

The change in force measurement may be as a result of, for instance, user motion and device orientation changes of the oral appliance and/or changes in the size of the part of the mouth clamped by the mount, e.g. as the mount is moved within the mouth (e.g. along the ridge of the teeth).

Figure 9 also illustrates an alternative approach for the mouth insertion mode (performed during the first time period t₁). Rather than controlling the actuating mechanism to negatively stretch the mount (i.e. push opposing ends apart), the mouth insertion mode may control the actuating mechanism to stretch the mount (e.g. to a maximum), so that opposing ends of the mount are as close together as possible, e.g. touching. This may reduce a size or shape of the mount to ease insertion into the mouth.

The skilled person will appreciate that the mouth insertion mode is optional, and does not need to be performed.

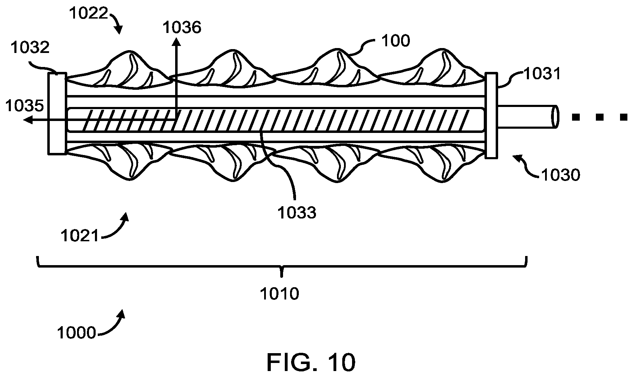

Figure 10 provides another example of an oral appliance 1000 according to an embodiment.

The oral appliance 1000 comprises a mouthpiece or head portion 1010, configured for insertion into the mouth of a subject. The mouthpiece 1010 comprises two mount arrays 1021, 1022, although one of these may be omitted. In this case, two mount arrays are used allowing one to clean lower and upper jaw simultaneously. Each mount array 1021, 1022 is formed of a plurality of connected mounts 100, which each contain one or more holes or slits. A set of one or more cleaning/treatment elements (not shown) is positioned on each mount 100. Examples of suitable mount arrays have been previously described.

The mouthpiece 1010 further comprises an actuating mechanism 1030, which controls a deformation/stretching of the mount arrays. In the illustrated example, the actuating mechanism comprises a first 1031 and second end 1032 respectively connected to a first and second end of each mount array. A distance between the first and second ends of the actuating mechanism is controllable via an actuator 1033, so as to control the distance between the first and second ends of each mount array. In this way, the actuating mechanism is configured to controllably stretch each mount array in a first direction 1035.

The actuating mechanism operates using an electro-magnetic control system configured to control the deformation of the mount using an electro-magnetic force. The actuating mechanism may operate using a linear actuator or motorized system, e.g. a travelling nut actuator 1033 as illustrated.

Other examples of actuating mechanisms include an inflatable bladder fixed to either end of the mount, and a fluid control system configured to control the entry and exit of fluid into the inflatable bladder to thereby control a deforming of the mount; a magnetic control system configured to control the deformation of the mount using a magnetic force; an electric control system configured to control the deformation of the mount using one or more materials exhibiting an electroactive responsive material property; a thermal control system configured to control the deformation of the mount using one or more temperature difference and/or gradient effects; and/or an optical control system configured to control the deformation of the mount using one or more electromagnetic waves, wherein the mount is photo-sensitive.

Any combination of these forms of actuating mechanisms could be used.

Stretching of each mount array causes each mount (of the mount array) to also stretch in the first direction. Stretching of a mount in the first direction 1035 causes said mount to change in geometric and extend material in a second direction 1036, due to the position and configuration of holes in said mount. In particular, each mount will bend (i.e. a curvature will increase) in a first plane (for which the first direction may be normal).

When the mouthpiece is positioned in a subject's mouth, stretching of the mount array in the first direction will result in the cleaning/treatment elements coming into closer proximity and/or contact and/or increasing a contact force with teeth of the subject; in the described example the teeth of lower and upper jaw due to the use of two mount arrays. In this way, control over the spatial and pressure relationship between the cleaning/treatment elements and the mouth can be achieved.

The operation of the actuating mechanism 1030 may be controlled by a controller (not shown), such as those previously described.

The actuation mechanism may be a linear actuator.

A hole in the deformable material is an opening through the deformable material of the mount. Each hole in the deformable material changes the topology of the mount, e.g., resposnive to a stretching of the mount.

The holes may be referred to as through holes. In other words, the holes extend through all of the deformable material of the mount.

The holes enable the deformable material to extend/curve in a (second) direction different to the (first) direction in which th deformable material is stretched. This is based on the principles of kirigami in which appropriately positioned cuts (i.e. through holes) on a piece of paper define the shape of the paper when it it is deformed.

When the mount is stretched in the first direction, the mount may stretch in the second direction and shrink in a third direction, where the first, second and third directions are all perpendicular to each other. In other words, when the mount is stretched in the first direction, the projection of the deformable material on a plane, where the first direction is normal to the plane, may form a curve. The curvature of the curve may be dependent on the amount of stretching in the first direction.

Embodiments make use of a controller. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

In various implementations, a processor or controller may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor or controller.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

## Claims

1. An oral appliance (700, 1000) for cleaning and/or treating a mouth of a subject, the oral appliance comprising:
a cleaning or treatment module (500) comprising:
one or more mounts being formed of a deformable material, each mount comprising one or more holes (110) positioned such that, when the mount is stretched in a first direction (120), the geometric shape of the mount is shifted so as to increase an amount of material that extends in at least one second, different direction (125); and
for each mount, a set of one or more cleaning or treatment elements (520) mounted on said mount for cleaning or treating one or more parts of a mouth; and
an actuation mechanism (710, 1030) configured to controllably stretch each mount in the first direction, **characterised in that** the actuation mechanism comprises an electro-magnetic control system configured to control the stretching of the mount using electro-magnetic force.

2. The oral appliance of claim 1, wherein the one or more holes of each mount are positioned such that, when the mount is stretched in the first direction, the curvature or flatness of the mount in a first plane (130) changes, wherein the first plane is angled with respect to first direction.

3. The oral appliance of claim 2, wherein the first direction is normal to the first plane.

4. The oral appliance of any of claims 1 to 3, wherein each mount is configured to be deformable between at least:
a first configuration (190), in which a radius (196) of the curvature of the mount in the first plane is at a first value; and
a second configuration (195), in which the radius of the curvature of the mount in the first plane is at a second value, smaller than the first value,
wherein the deforming between the first and second configurations is responsive to a stretching of the mount in the first direction.

5. The oral appliance of claim 4, wherein the stretching causes a change in length of the mount in the first direction.

6. The oral appliance of any of claims 1 to 5, wherein the one or more holes of each mount comprise two or more slits, which are aligned in parallel with each other and separated by a predetermined length.

7. The oral appliance of any of claims 1 to 6, wherein each hole of each mount is completely surrounded by deformable material of the mount.

8. The oral appliance of any of claims 1 to 7, comprising a mount array (600, 1021, 1022) comprising two or more of the mounts.

9. The oral appliance of any of claims 1 to 8, further comprising a controller (720) configured to control the operation of the actuation mechanism, to thereby control the geometric shape shift of each mount.

10. The oral appliance of claim 9, wherein the controller is configured to be operable in a cleaning mode, during which the controller controls the geometric shape of the mount such that the extent of material in the first and/or second direction is greater than a minimum magnitude.

11. The oral appliance of claim 10, wherein, when operating in the cleaning mode, the controller varies the geometric shape of each mount so that the mount performs micromotions or vibrates.

12. The oral appliance of any of claims 9 to 11, wherein the controller is configured to be operable in a mouth-insertion mode or mouth-removal mode, during which the control controls the geometric shape of each mount such that the mount is substantially flat or is deformed to its maximum curvature.

13. The oral appliance (1000) of any of claims 1 to 12, wherein the actuation mechanism comprises:
a motorized system (1033) configured to controllably stretch the mount in the first direction;
an inflatable bladder fixed to either end of the mount, and a fluid control system configured to control the entry and exit of fluid into the inflatable bladder to thereby control a stretching of the mount;
a magnetic control system configured to control the stretching of the mount using a magnetic;
an electric control system configured to control the stretching of the mount using one or more materials exhibiting an electroactive responsive material property;
a thermal control system configured to control the stretching of the mount using one or more temperature difference and/or gradient effects; and/or
an optical control system configured to control the stretching of the mount using one or more electromagnetic waves, wherein the mount is photo-sensitive.

## Patentansprüche

1. Mundgerät (700, 1000) zum Reinigen und/oder Behandeln des Mundes eines Patienten, das Mundgerät umfassend:
ein Reinigungs- oder Behandlungsmodul (500), umfassend:
eine oder mehrere Halterungen aus einem verformbaren Material, wobei jede Halterung ein oder mehrere Löcher (110) aufweist, die so angeordnet sind, dass sich beim Dehnen der Halterung in einer ersten Richtung (120) die geometrische Form der Halterung so verschiebt, dass eine Materialmenge zunimmt, die sich in mindestens einer zweiten, anderen Richtung (125) erstreckt; und
für jede Halterung ein Satz von einem oder mehreren Reinigungs- oder Behandlungselementen (520), die auf dieser Halterung zur Reinigung oder Behandlung eines oder mehrerer Teile des Mundes angebracht sind; und
ein Betätigungsmechanismus (710, 1030), der so ausgebildet ist, dass er jede Halterung in der ersten Richtung kontrolliert dehnen kann, **dadurch gekennzeichnet, dass** der Betätigungsmechanismus ein elektromagnetisches Steuerungssystem umfasst, das so ausgebildet ist, dass es das Dehnen der Halterung mittels elektromagnetischer Kraft steuert.

2. Mundgerät nach Anspruch 1, wobei die eine oder mehreren Löcher jeder Halterung so angeordnet sind, dass sich beim Dehnen der Halterung in der ersten Richtung die Krümmung oder Ebenheit der Halterung in einer ersten Ebene (130) ändert, wobei die erste Ebene gegenüber der ersten Richtung abgewinkelt ist.

3. Mundgerät nach Anspruch 2, wobei die erste Richtung senkrecht zur ersten Ebene verläuft.

4. Mundgerät nach einem der Ansprüche 1 bis 3, wobei jede Halterung so ausgebildet ist, dass sie zwischen mindestens folgenden Parametern verformbar ist:
eine erste Konfiguration (190), bei der der Radius (196) der Krümmung von der Halterung in der ersten Ebene einen ersten Wert aufweist; und
eine zweite Konfiguration (195), bei der Radius der Krümmung von der Halterung in der ersten Ebene einen zweiten Wert aufweist, der kleiner ist als der erste Wert,
wobei die Verformung zwischen der ersten und zweiten Konfiguration auf ein Dehnen der Halterung in der ersten Richtung reagiert.

5. Mundgerät nach Anspruch 4, wobei das Dehnen eine Längenänderung der Halterung in der ersten Richtung bewirkt.

6. Mundgerät nach einem der Ansprüche 1 bis 5, wobei die eine oder mehrere Öffnungen jeder Halterung zwei oder mehr Schlitze umfassen, die parallel zueinander ausgerichtet und durch eine vorbestimmte Länge voneinander getrennt sind.

7. Mundgerät nach einem der Ansprüche 1 bis 6, wobei jede Öffnung jeder Halterung vollständig von verformbarem Material der Halterung umschlossen ist.

8. Mundgerät nach einem der Ansprüche 1 bis 7, umfassend eine Halterungsanordnung (600, 1021, 1022), umfassend zwei oder mehr Halterungen.

9. Mundgerät nach einem der Ansprüche 1 bis 8, weiter umfassend eine Steuereinheit (720), die so ausgebildet ist, dass sie die Funktion des Betätigungsmechanismus steuert und dadurch die geometrische Formverschiebung jeder Halterung steuert.

10. Mundgerät nach Anspruch 9, wobei die Steuereinheit so ausgebildet ist, dass sie in einem Reinigungsmodus betrieben werden kann, in dem die Steuereinheit die geometrische Form der Halterung so steuert, dass das Ausdehnen des Materials in der ersten und/oder zweiten Richtung größer als ein Mindestmaß ist.

11. Mundgerät nach Anspruch 10, wobei die Steuereinheit im Reinigungsmodus die geometrische Form jeder Halterung so verändert, dass die Halterung Mikrobewegungen ausführt oder vibriert.

12. Mundgerät nach einem der Ansprüche 9 bis 11, wobei die Steuereinheit so ausgebildet ist, dass sie im Mund-Einführungsmodus oder Mund-Entnahmemodus betrieben werden kann, wobei die Steuereinheit währenddessen die geometrische Form jeder Halterung so steuert, dass die Halterung im Wesentlichen flach ist oder bis zu ihrer maximalen Krümmung verformt wird.

13. Mundgerät (1000) nach einem der Ansprüche 1 bis 12, wobei der Betätigungsmechanismus Folgendes umfasst:
ein motorisiertes System (1033), das so ausgebildet ist, dass es die Halterung in der ersten Richtung kontrolliert dehnt;
eine an beiden Enden der Halterung befestigte aufblasbare Blase und ein Fluidsteuerungssystem, das den Ein- und Austritt von Fluid in die aufblasbare Blase steuert, um dadurch ein Dehnen der Halterung zu steuern;
ein magnetisches Steuerungssystem, das so ausgebildet ist, dass es das Dehnen der Halterung mittels eines Magneten steuert;
ein elektrisches Steuerungssystem, das so ausgebildet ist, dass es das Dehnen der Halterung mittels eines oder mehrerer Materialien steuert, die eine elektroaktive, reaktionsfähige Materialeigenschaft aufweisen;
ein Temperaturregelsystem, das so ausgebildet ist, dass es das Dehnen der Halterung unter Verwendung eines oder mehrerer Temperaturunterschiede und/oder Gradienteffekte steuert; und/oder
ein optisches Steuerungssystem, das so ausgebildet ist, dass es das Dehnen der Halterung mittels einer oder mehrerer elektromagnetischer Wellen steuert, wobei die Halterung lichtempfindlich ist.

## Revendications

1. Appareil buccal (700, 1000) pour nettoyer et/ou traiter la bouche d'un sujet, l'appareil buccal comprenant :
un module de nettoyage ou de traitement (500) comprenant :
un ou plusieurs supports étant constitués d'un matériau déformable, chaque support comprenant un ou plusieurs trous (110) positionnés de telle sorte que, lorsque le support est étiré dans une première direction (120), la forme géométrique du support est modifiée de manière à augmenter la quantité de matériau qui s'étend dans au moins une seconde direction différente (125) ; et
pour chaque support, un ensemble d'un ou plusieurs éléments de nettoyage ou de traitement (520) montés sur ledit support pour nettoyer ou traiter une ou plusieurs parties de la bouche ; et
un mécanisme d'actionnement (710, 1030) configuré pour étirer de manière commandable chaque support dans la première direction, **caractérisé en ce que** le mécanisme d'actionnement comprend un système de commande électromagnétique configuré pour commander l'étirement du support à l'aide d'une force électromagnétique.

2. Appareil buccal selon la revendication 1, dans lequel les un ou plusieurs trous de chaque support sont positionnés de telle sorte que, lorsque le support est étiré dans la première direction, la courbure ou la planéité du support dans un premier plan (130) change, dans lequel le premier plan est incliné par rapport à la première direction.

3. Appareil buccal selon la revendication 2, dans lequel la première direction est normale au premier plan.

4. Appareil buccal selon l'une quelconque des revendications 1 à 3, dans lequel chaque support est configuré pour être déformable entre au moins :
une première configuration (190), dans laquelle un rayon (196) de la courbure du support dans le premier plan est à une première valeur ; et
une seconde configuration (195), dans laquelle le rayon de courbure du support dans le premier plan est à une seconde valeur, inférieure à la première valeur,
dans lequel la déformation entre la première et la seconde configuration est sensible à un étirement du support dans la première direction.

5. Appareil buccal selon la revendication 4, dans lequel l'étirement provoque un changement de longueur du support dans la première direction.

6. Appareil buccal selon l'une quelconque des revendications 1 à 5, dans lequel les un ou plusieurs trous de chaque support comprennent deux fentes ou plus, qui sont alignées parallèlement l'une à l'autre et séparées par une longueur prédéterminée.

7. Appareil buccal selon l'une quelconque des revendications 1 à 6, dans lequel chaque trou de chaque support est complètement entouré par le matériau déformable du support.

8. Appareil buccal selon l'une quelconque des revendications 1 à 7, comprenant un ensemble de supports (600, 1021, 1022) comprenant deux des supports ou plus.

9. Appareil buccal selon l'une quelconque des revendications 1 à 8, comprenant en outre un dispositif de commande (720) configuré pour commander le fonctionnement du mécanisme d'actionnement, afin de commander ainsi le changement de forme géométrique de chaque support.

10. Appareil buccal selon la revendication 9, dans lequel le dispositif de commande est configuré pour fonctionner en mode nettoyage, durant lequel il commande la forme géométrique du support de sorte que la quantité de matériau dans la première et/ou la seconde direction est supérieure à une magnitude minimale.

11. Appareil buccal selon la revendication 10, dans lequel, en mode de nettoyage, le dispositif de commande modifie la forme géométrique de chaque support de sorte que le support effectue des micro-mouvements ou vibre.

12. Appareil buccal selon l'une quelconque des revendications 9 à 11, dans lequel le dispositif de commande est configuré pour fonctionner en mode d'insertion buccale ou en mode de retrait buccal, au cours duquel il commande la forme géométrique de chaque support de sorte que le support soit sensiblement plat ou soit déformé à sa courbure maximale.

13. Appareil buccal (1000) selon l'une quelconque des revendications 1 à 12, dans lequel le mécanisme d'actionnement comprend :
un système motorisé (1033) configuré pour étirer de manière commandée le support dans la première direction ;
une poche gonflable fixée à chaque extrémité du support, et un système de commande de fluide configuré pour commander l'entrée et la sortie du fluide dans la poche gonflable afin de commander l'étirement du support ;
un système de commande magnétique configuré pour commander l'étirement du support à l'aide d'un aimant ;
un système de commande électrique configuré pour commander l'étirement du support à l'aide d'un ou plusieurs matériaux présentant une propriété de matériau réactif électro-actif ;
un système de commande thermique configuré pour commander l'étirement du support à l'aide d'une ou plusieurs différences de température et/ou des effets de gradient ; et/ou
un système de commande optique configuré pour commander l'étirement du support à l'aide d'une ou plusieurs ondes électromagnétiques, dans lequel le support est photosensible.
